(19) Europäisches Patentamt
European Patent Office
Office européen des brevets

(11) **EP 4 685 645 A1**

(12) **EUROPEAN PATENT APPLICATION**

(43) Date of publication:
28.01.2026 Bulletin 2026/05

(21) Application number: 25190802.6

(22) Date of filing: 21.07.2025

(51) International Patent Classification (IPC):
*G06F 9/50* (2006.01)    *G06Q 10/04* (2023.01)

(52) Cooperative Patent Classification (CPC):
**G06F 9/5072;** G06F 2209/5011; G06F 2209/502;
G06Q 10/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 25.07.2024 US 202418784433

(71) Applicant: Capital One Services, LLC
McLean, Virginia 22102 (US)

(72) Inventors:
• **ANAND, Anurag**
**McLean, 22102 (US)**
• **SESU, Eric**
**McLean, 22102 (US)**
• **SHINDE, Raj**
**McLean, 22102 (US)**

(74) Representative: **Boult Wade Tennant LLP**
**Salisbury Square House**
**8 Salisbury Square**
**London EC4Y 8AP (GB)**

(54) **SYSTEMS AND METHODS FOR DYNAMICALLY SELECTING GEOGRAPHIC LOCATIONS FOR NETWORK ALLOCATION SITES FOR DISTRIBUTED RESOURCES**

(57) Systems and methods are for increasing the efficiencies of distributed resources in a network through the selection of network allocation sites that maximize efficiency of the distributed resources. The system segregates each of these into a resource type. The system then determines based on a geographic location (as opposed to a network location), the ideal network allocation site for use in allocating the distributed resources of the given type. The network allocation site represents the geographic location that forms the epicenter of distribution of the distributed resources.

**FIG. 1**

EP 4 685 645 A1

**Description**

**BACKGROUND**

A cloud computing network is a collection of interconnected hardware, software, and virtualized resources that deliver computing services over the internet. It allows users to access and use IT resources such as servers, storage, databases, networking, software, and analytics on a pay-as-you-go basis, without having to own or manage the underlying physical infrastructure. Benefits of cloud computing including allowing users to provision computing capabilities as needed automatically without requiring human interaction with each service provider. Additionally, cloud computing resources are available over the network and accessed through standard mechanisms, promoting use by heterogeneous thin or thick client platforms, and these resources can be elastically provisioned and released, in some cases automatically, to scale rapidly outward and inward commensurate with demand. As yet another benefit, the provider's computing resources may be pooled to serve multiple consumers using a multi-tenant model, with different physical and virtual resources dynamically assigned and reassigned according to consumer demand.

However, as cloud computing and the use of cloud resources has gained popularity, the manner in which resources are used as well as the complexity of applications that use them has also increased. Where cloud providers could previously mitigate any latency in data delivered over cloud computing network through optimizing their software and communication protocols to ensure efficient data transfer, the speed required by modern computing system negates even these advantages.

**SUMMARY**

Accordingly, systems and methods are described herein for increasing the efficiencies of distributed resources in a network through the selection of network allocation sites that maximize efficiency of the distributed resources. For example, as opposed to treating distributed resources has homogenous resources, the system segregates each of these into a resource type. The system then determines based on a geographic location (as opposed to a network location), the ideal network allocation site for use in allocating the distributed resources of the given type. The network allocation site represents the geographic location that forms the epicenter of distribution of the distributed resources.

For example, as opposed to conventional systems that may scale resources to meet demand or distribute resources from a given network location (e.g., a hub and spoke model), the systems and methods realize that as the use of distributed resources increases, and the manner in which they are used puts increasing pressure on their efficient use (e.g., beyond the mitigation of conventional techniques), an unconventional approach to network management and resource distribution is needed.

The systems and methods implement this unconventional approach by selecting a geographic location of a network allocation site based on the aggregated efficiencies of distributed resources distributed from that network allocation site. Notably, dynamically selecting network allocation sites is in contrast to conventional approaches that dynamically select the distribution of resources based on a static location of a network hub (e.g., a server farm location). While selecting the distribution of resources based on a static location of a network hub may have some advantages at it lowers start-up costs and utilizes current network infrastructure efficiently, it does not lead to the most efficient use of the distributed resources. For example, a conventional model may have a server farm located in a given city serve that city and its suburbs; however, as the remote work and other factors have led to a decentralizing of many cities, the most efficient use of resources for an outlying suburb may come from a neighboring city's server farm.

In such instances, determining a geographic location of a network allocation site (e.g., located in the outlying suburb) from which to distribute distributed resources (e.g., irrespective of whether a distributed resource's location overlaps with a previous network allocation mapping based on the two cities) may lead to increased efficiencies. However, while dynamically selecting a geographic location of a network allocation site (e.g., irrespective of current infrastructure) may lead to some technical benefits, ignoring practical implications of current infrastructure can nonetheless negate any potential benefit. Accordingly, to overcome any technical problems that arise under this novel approach, the systems and methods institute two guardrails to ensure the efficiency. First, the systems and methods segregate the distributed resources by type. For example, each type of distributed resource may have a different variance in efficiency. Second, the systems and methods institute a geographic limitation keyed to the actual and/or current location of the distributed resource. Using these guardrails, the systems and methods can ensure that any dynamically selected network allocation site produces the optimal efficiency for distributed resources.

In some aspects, systems and methods for dynamically selecting geographic locations for network allocation sites of distributed resources are described. For example, the system may receive a first distributed resource, of a plurality of distributed resources, for allocation, wherein the first distributed resource comprises a first cloud computing resource used by a first user. The system may determine a first geographic location for the first distributed resource. The system may determine a first type for the first distributed resource. The system may input the first geographic location and the first type into a network allocation site recommendation model to generate a first output, wherein the network allocation site recommendation model uses a linear programming algorithm, wherein an objective function of the linear programming algorithm comprises a maximum aggregated allocation efficiency for a subset of the plurality of distributed resources at a proposed geographic location for a proposed network allocation site, and wherein a first constraint for the objective function comprises a minimum net efficiency for each distributed resource in the subset of the plurality of distributed resources. The system may determine, based on the first output, a first geographic reference point for a first network allocation site of a plurality of network allocation sites, wherein each of the plurality of network allocation sites comprises a respective geographic reference point for allocating one or more of a plurality of distributed resources. The system may generate for display, on a user interface, a first recommendation for using the first network allocation site for the first distributed resource based on the first geographic reference point.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

## BRIEF DESCRIPTION OF THE DRAWINGS

FIG. 1 shows an illustrative diagram for dynamically selecting network allocation sites, in accordance with one or more embodiments.
FIGS. 2A-D shows illustrative tables for indicating realized efficiencies for distributed resources distributed by dynamically selected network allocation sites, in accordance with one or more embodiments.
FIG. 3 shows illustrative components for a system used to dynamically selecting network allocation sites, in accordance with one or more embodiments.
FIG. 4 shows a flowchart of the steps involved in dynamically selecting network allocation sites, in accordance with one or more embodiments.

## DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

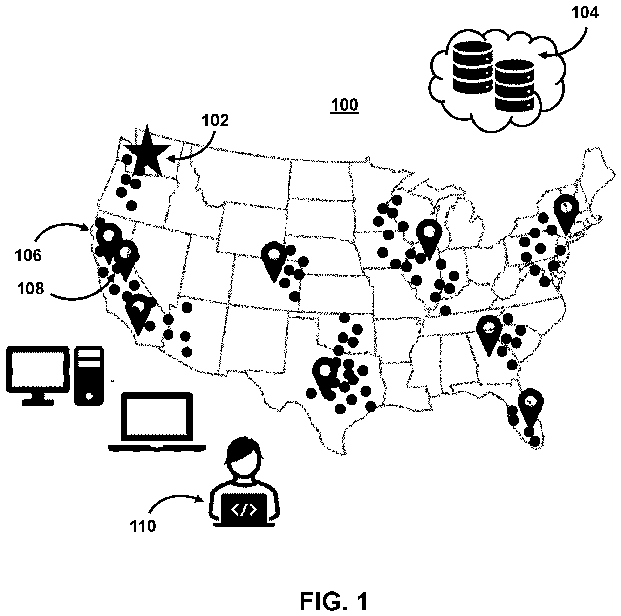

FIG. 1 shows an illustrative diagram for dynamically selecting network allocation sites, in accordance with one or more embodiments. For example, diagram 100 may illustrate a system for dynamically selecting geographic locations for network allocation sites of distributed resources in a cloud computing network.

The system may select a geographic location (e.g., represented by a geographic reference point) of a network allocation site (e.g., geographic reference point 102) based on the aggregated efficiencies of distributed resources distributed from that network allocation site. The system may dynamically select network allocation sites (e.g., network allocation site 106 and network allocation site 108).

In such instances, the system may determine a geographic location of a network allocation site (e.g., geographic reference point 102) from which to distribute distributed resources. To overcome any technical problems that arise from dynamically selecting network allocation sites, the system may institute two guardrails to ensure the efficiency. First, the system segregates the distributed resources by type. For example, each type of distributed resource may have a different variance in efficiency. Second, the system may institute a geographic limitation keyed to the actual and/or current location of the distributed resource. Using these guardrails, the system can ensure that any dynamically selected network allocation site produces the optimal efficiency for distributed resources.

For example, the system may receive a distributed resource (or a request for a distributed resource) of a plurality of distributed resources, for allocation. As shown in FIG. 1, the distributed resources may comprise cloud computing resources 104 used by user 110. As described herein, a distributed resource may refer to a system or asset that is distributed across multiple locations, rather than being distributed in a centralized place. In computing, distributed resources may include a network of interconnected servers, storage devices, or databases that work together to perform tasks, enhance efficiency, and improve reliability. This setup allows for load balancing, redundancy, and scalability, as tasks can be distributed across various nodes. In the energy sector, distributed resources typically refer to small-scale power generation or storage systems, such as solar panels, wind turbines, and batteries, which are located close to where the energy is consumed. This approach can reduce transmission losses, increase energy security, and support the integration of renewable energy sources. Overall, distributed resources offer greater flexibility and resilience compared to centralized systems.

In one embodiment, the distributed resource may comprise a cloud computing resource. A cloud computing resource may be a virtualized asset provided by cloud service providers that can be accessed over the internet. These resources encompass a wide range of services, including computing power, storage, databases, networking, software, and analytics. Unlike traditional on-premises resources, cloud computing resources are highly scalable and can be dynamically allocated based on demand. Users (e.g., user 110) can access and manage these resources via web interfaces or APIs, allowing for flexible and efficient resource utilization. Cloud resources are typically hosted in data centers operated by companies like Amazon Web Services (AWS), Microsoft Azure, or Google Cloud Platform (GCP). The cloud model offers significant advantages, such as reduced capital expenditure, improved collaboration, and the ability to quickly deploy and scale applications. Furthermore, cloud computing supports various deployment models, including public, private, and hybrid clouds, catering to different organizational needs and compliance requirements. This flexibility makes cloud computing a cornerstone of modern IT infrastructure, enabling businesses to innovate and respond rapidly to changing market conditions.

It should be noted that in other embodiments, other goods and/or services may be used as a distributed resource and the embodiments described herein may be applied to them. For example, a distributed resource may comprise any good and/or service that is distributed. Physical goods like food, clothing, vehicles, electronics, and/or household items may be distributed through supply chain networks involving manufacturers, wholesalers, retailers, and/or logistics providers. These supply chain networks ensure products are transported from production facilities to end consumers, often involving multiple modes of transportation such as trucks, ships, and airplanes. Additionally, digital goods such as software, e-books, music, and movies are distributed online through platforms and services like app stores, streaming services, and digital marketplaces.

Services may also be distributed, with examples including utilities (electricity, water, and gas), which are delivered through extensive infrastructure networks. Healthcare services are distributed through a network of hospitals, clinics, and telemedicine platforms, ensuring access to medical care across different regions. Financial services are provided by banks, online platforms, and fintech companies, offering a range of services from banking to investment and insurance. Education has increasingly become distributed through online courses, virtual classrooms, and e-learning platforms, making learning accessible to a broader audience.

The system may determine a first geographic location for the first distributed resource. For example, the geographic location of the distributed resource may be the location at which the resource is distributed and/or use. For example, as shown in FIG. 1, the geographic location for the distributed resource may comprise the location of user (110). In some embodiments, the system may determine the geographic location of a user, resource, or other object manually (e.g., based on a user input (e.g., from user 110)) or automatically. One method for automatically determining the geographic location is IP geolocation, which maps an IP address to a physical location. This technique uses databases that correlate IP address ranges with geographic regions, although its accuracy can vary. Another method involves GPS (Global Positioning System), which is particularly accurate and widely used in mobile devices. GPS works by triangulating signals from multiple satellites to pinpoint a device's exact location. Wi-Fi triangulation is another approach, where a device's location is determined by measuring the signal strengths of nearby Wi-Fi networks and comparing them to a database of known network locations. Additionally, mobile networks can use cell tower triangulation, calculating a device's position based on its distance from multiple cell towers. Furthermore, location services on devices often combine these methods with other contextual data, such as Bluetooth beacons and sensor data, to improve accuracy. By leveraging these various techniques, the system can provide precise geographic location determinations.

In some embodiments, the geographic location may comprise an address, zip code, and/or other government assigned address. For example, traditional brick-and-mortar stores, such as supermarkets, department stores, and specialty shops, remain popular points of sale for physical goods. In such cases, the geographic location may comprise an address of the store. Online retail may also provide a distribution channel, in which a warehouse, pickup location, and/or delivery address corresponds to the geographic location. In the services sector, distribution points vary widely. Utilities are accessed through centralized distribution networks and customer service centers, while healthcare services are provided through hospitals, clinics, and telehealth platforms. Financial services are distributed through bank branches, ATMs, online banking portals, and mobile apps. Educational services are offered through traditional schools and universities, as well as online learning platforms. The hospitality industry also has multiple points of sale, including hotels, restaurants, and online booking platforms.

The system may determine a type for a distributed resource. The type may comprise a category, cluster, and/or other grouping of resources. Each type may correspond to one or more characteristics. As described herein, a character may comprise any attribute that distinguished one type from another. For example, in the case of cloud computing, cloud computing resources are diverse and can be categorized into several types based on their different functions and use cases (e.g., compute resources, storage resources, database resources, networking resources, security resources, management resources, etc.). As another example, in the case of a good (e.g., vehicles), the resources may have types corresponding to make, model, class, year, and/or other characteristics. For example, types of vehicles may include sedans, coupes, pick-up truck sport utility vehicles, etc.

The system may input the first geographic location and the first type into a network allocation site recommendation model to generate a first output. The system network allocation site recommendation model may use a linear programming algorithm to select an ideal network allocation site (e.g., corresponding to geographic reference point 102). For example, the system may determine, based on the first output, a first geographic reference point for a first network allocation site of a plurality of network allocation sites. In some embodiments each of the plurality of network allocation sites may comprise a respective geographic reference point for allocating one or more of a plurality of distributed resources. The geographic reference point may correspond to a location from which the distributed resources are distributed.

While the network allocation site may correspond to a physical location (e.g., a store location, auction site, dealership), the network allocation site may in some embodiments correspond to a virtual location. That is, the network allocation site may correspond to a geographic reference point (e.g., a value) used by the network allocation site recommendation model to allocate resource (e.g., irrespective of whether any infrastructure (e.g., a server farm) exists at the geographic reference point).

For example, the geographic reference point may correspond to a centroid for a recommendation model. In the context of machine learning and data clustering, a centroid is the central point of a cluster, calculated as the mean position of all the points within that cluster. This concept is crucial in recommendation models, especially in algorithms like k-means clustering, where the centroid serves as a reference point for grouping similar items or users. By identifying centroids, the model can efficiently distribute resources or recommendations based on the proximity of data points to these central locations. This ensures that resources are allocated in a way that maximizes relevance and efficiency, enhancing the overall effectiveness of the recommendation system. The use of centroids helps streamline the process of matching users with content, products, or services that best meet their preferences and needs.

The system may then generate for display, on a user interface, a first recommendation for using the first network allocation site for the first distributed resource based on the first geographic reference point. As referred to herein, a "user interface" may comprise a human-computer interaction and communication in a device, and may include display screens, keyboards, a mouse, and the appearance of a desktop. For example, a user interface may comprise a way a user interacts with an application or a website. As referred to herein, "content" should be understood to mean an electronically consumable user asset, such as Internet content (e.g., streaming content, downloadable content, Webcasts, etc.), video clips, audio, content information, pictures, rotating images, documents, playlists, websites, articles, books, electronic books, blogs, advertisements, chat sessions, social media content, applications, games, and/or any other media or multimedia and/or combination of the same. Content may be recorded, played, displayed, or accessed by user devices, but can also be part of a live performance. Furthermore, user generated content may include content created and/or consumed by a user. For example, user generated content may include content created by another, but consumed and/or published by the user.

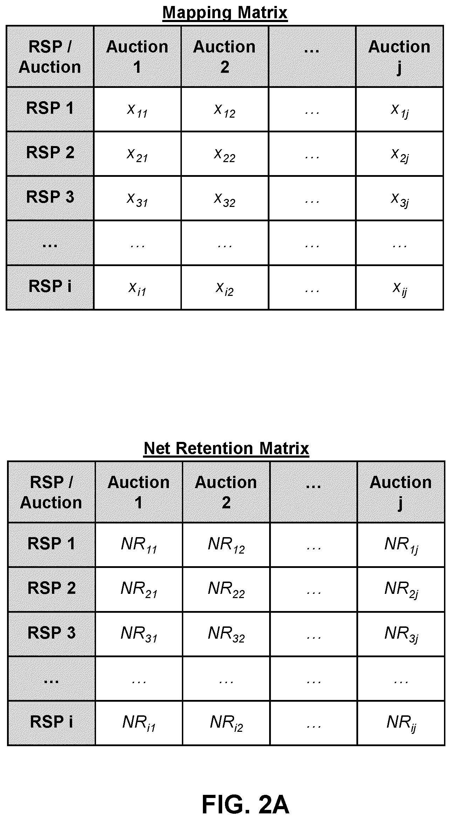

FIGS. 2A-C shows illustrative tables for indicating realized efficiencies for distributed resources distributed by dynamically selected network allocation sites, in accordance with one or more embodiments. As described above, the embodiments described herein may be applied to numerous technical areas from cloud computing to the distribution of good and/or services.

With respect to FIGS. 2A-D, the embodiments are described as relating to used car sales (e.g., the distributed resource) through auction sites (e.g., the network allocation sites) across a nation-wide sale network. As described, the system may determine a geographic location (e.g., represented by a geographic reference point that acts as a centroid for a recommendation model) of a network allocation site (e.g., an address, current dealership location, etc.) from which to distribute distributed resources (e.g., used cars), which may lead to increased efficiencies. While dynamically selecting the geographic location of a network allocation site, the system may lead to some technical benefits, ignoring practical implications of current infrastructure can nonetheless negate any potential benefit. Accordingly, to overcome any technical problems that arise under this novel approach, the system institutes two guardrails to ensure the efficiency. First, the system segregates the distributed resources by type (e.g., sedan, coupe, pick-up, etc. in the used car example). For example, each type of distributed resource may have a different variance in efficiency (e.g., net profit on sale, number of sales, turnover rate, etc.) in a different location. Second, the system instituted a geographic limitation keyed to the actual and/or current location of the distributed resource (e.g., a transportation distance). Using these guardrails, the system can ensure that any dynamically selected network allocation site produces the optimal efficiency for distributed resources.

FIG. 2A shows an illustrative diagram for a matrix mapping net retention for a given resale place (e.g., a current location of a distributed resource) and a network allocation site (e.g., an auction). For example, the system may use a vehicle segment assignment strategy that focuses on identifying high performing sites that will maximize benefits within reasonable distance. The system may reassign vehicles from low performing sites at a segment level (e.g., vehicle segment such as car, truck, van, sedan, coupe, etc.) to a site with high performance in that segment. The system determines minimum incremental benefit to change auction assignment from nearest auction applicable to decision in line with current strategy. The system restricts the maximum transport distance between RSP (e.g., resale place) and auction (e.g., network allocation site) to a set distance (e.g., 500 miles) to minimize any operational challenges. The volume assigned to a particular auction from different RSPs is set by the system to be within the capacity constraints of that auction house. Notably, vehicle segment-level optimization will allow for an assignment strategy based on segment performance rather than overall site performance.

The system uses an iterative approach in place that assigns volume from an RSP to the nearest auction and then checks for alternatives within the constraints. For example, the system may assign a distributed resource to the nearest network allocation site (e.g., the nearest auction from RSP storage). The system then calculates the net retention of nearest, n, auction. The system then finds auctions with gross retention statistically greater that the nearest auction. The system then applies the constraints to distance, capacity, and minimum benefits (e.g., Max Auction Capacity - 75%; Max distance from RSP to auction - 500 miles; Minimum Dollar Benefit - $300). If the system finds auctions meeting the conditions, the system assigns the distributed resource to the new action with the maximum incremental net retention. To minimize technical drawbacks, the system uses a linear programming algorithm to maximize net retention under constraints.

For example, the linear programming algorithm comprises a maximum aggregated allocation efficiency for a subset of the plurality of distributed resources at a proposed geographic location for a proposed network allocation site. By doing so, the search for the most optimal auction is independent of the closest auction to an RSP. Additionally, the model guarantees to maximize net retention. The model also is modularized /parameterized and has a much simpler workflow, which is easier to maintain, modify, and productionize. Finally, the model can run for any distributed resource (e.g., for any vehicle subclass. It can be either body type or make model or any other segment).

FIG. 2A shows matrixes for mapping net retention. Net retention (e.g., NR) comprises gross retention minus the difference of (transportation cost divided by average price). For example, the linear programming algorithm may use the objective function shown below. Notably, the objective function includes two features. First, $x_{ij}$, the RSP at a given auction site, is subject to a binary restraint as an RSP cannot split volume. Second, there is a limitation that one RSP can be mapped to only one action $\Sigma\, x_{ij} = 1$.

$$Objective_{max} = \sum_i \sum_j (x_{ij} * NR_{ij}) \quad ;Subject\ to: \quad x_{ij}: \{0,1\} \text{ and } \sum_j x_{ij} = 1$$

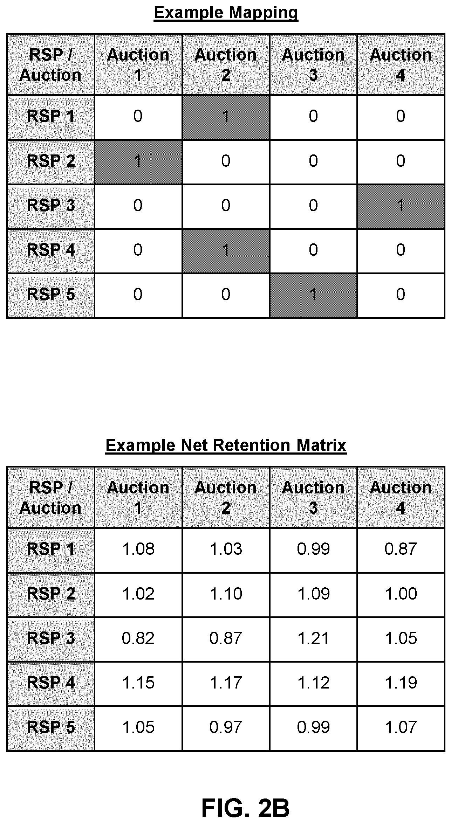

As shown in FIG. 2B, the objective calculates the sum of net retention for a current mapping between distributed resources (e.g., RSPs) and proposed network allocation sites (e.g., auction sites). As shown in FIG. 2B, the aggregated NR of the current mapping = (1 * 1.03) + (1 * 1.02) + (1 * 1.05) + (1 * 1.17) + (1 * 0.99). For example, a first decision variable for the objective function comprises a predicted net efficiency for each distributed resource in the subset of the plurality of distributed resources and a second decision variable for the objective function comprises a distance for each distributed resource in the subset of the plurality of distributed resources from a respective current location to the proposed geographic location. The objective function may also include a first constraint for the objective function comprises a minimum net efficiency for each distributed resource in the subset of the plurality of distributed resources, and a second constraint for the objective function comprises a maximum distance for each distributed resource in the subset of the plurality of distributed resources from a respective current location to the proposed geographic location. An example, of the objective function with constraints is shown below.

$$Objective_{max} = \sum_i \sum_j (x_{ij} * NR_{ij}) * SM_{ij} * DM_{ij} * TM_{ij}$$

$$Subject\ to: \quad x_{ij}: \{0,1\} \text{ and } \sum_j x_{ij} = 1 \quad and \quad \sum_i x_{ij} * rsp\_vol_i >= \text{min auction capacity}_j$$

For example, SM may correspond to a significance constraint, DM may correspond to a distance constraint, and TM may correspond to a minimum benefit constraint. These may comprise soft constraints that allow the model to run even if the constraints are violated, it will default to the current mapping. The model also includes a minimum auction capacity constraint, which is a hard constraint that prevents the model from running if violated. The model may use the objective function along with current and historical data such as current mapping of RSPs to auction, transportation cost details, previous auction sale data, and/or optimal mappings between RSPs and auctions.

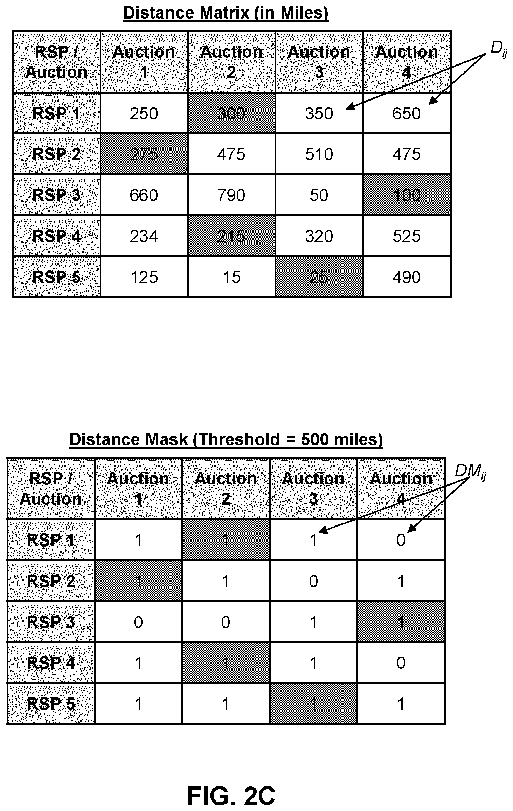

In some embodiments, additional mask may be applied based on different variables. For example, FIG. 2C shows the results with a threshold distance is set at 500 miles. In such case, the objective function and masking function may comprise:

$$\underset{max}{Objective} = \sum_{i=1}^{i=5} \sum_{j=1}^{j=4} (x_{ij}*NR_{ij})*DM_{ij}*TM_{ij} \quad ;Subject\ to:\ \ x_{ij}:\ \{0,1\}\ and\ \sum_{j=1}^{j=4} x_{ij} = 1$$

$$(Distance\ (D_{ij}) < Threshold) => 1;\ else => 0$$

It should be further noted that in some embodiments, the system may apply Boolean functions to the masking logic. For example, applying a Boolean function to the minimum benefit constraint may result in:

$$\underset{max}{Objective} = \sum_{i=1}^{i=5} \sum_{j=1}^{j=4} (x_{ij}*NR_{ij})*TM_{ij} \quad ;Subject\ to:\ \ x_{ij}:\ \{0,1\}\ and\ \sum_{j=1}^{j=4} x_{ij} = 1$$

(Potential lift > Threshold) or (Potential lift == 0) => 1
(Potential lift > 0) and (Potential lift < Threshold) => 0
(Potential lift < 0) => 0

Furthermore, in some embodiments, the system may apply a significance constraint to the objective function using a two step approach. For example, the system may determine a pairwise significance calculation using a paired t-test for equality of means. The system may conduct a one tailed test, where each row represents the p-value of the test: Gross Retention of Row Auction > Gross Retention of Column Auction. The system may then compare gross retention at a disturbed resource level for each auction combinations. In order for the significance testing to be valid, the system may also require a minimum sample size (e.g., at least 30 vehicles to be sold at an auction). The pairwise significance matrix will have a default value of 999 in case an auction does not have the volume threshold. The significance mask may then be converted to a Boolean mask such that:

$$\underset{max}{Objective} = \sum_{i=1}^{i=5} \sum_{j=1}^{j=4} (x_{ij}*NR_{ij})*SM_{ij}*DM_{ij}*TM_{ij} \quad ;Subject\ to:\ \ x_{ij}:\ \{0,1\}\ and\ \sum_{j=1}^{j=4} x_{ij} = 1$$

$$(Significance\ (S_{ij}) <= Threshold)\ |\ (Significance\ (S_{ij}) == 0.5)$$
$$=> 1;\ else => 0$$

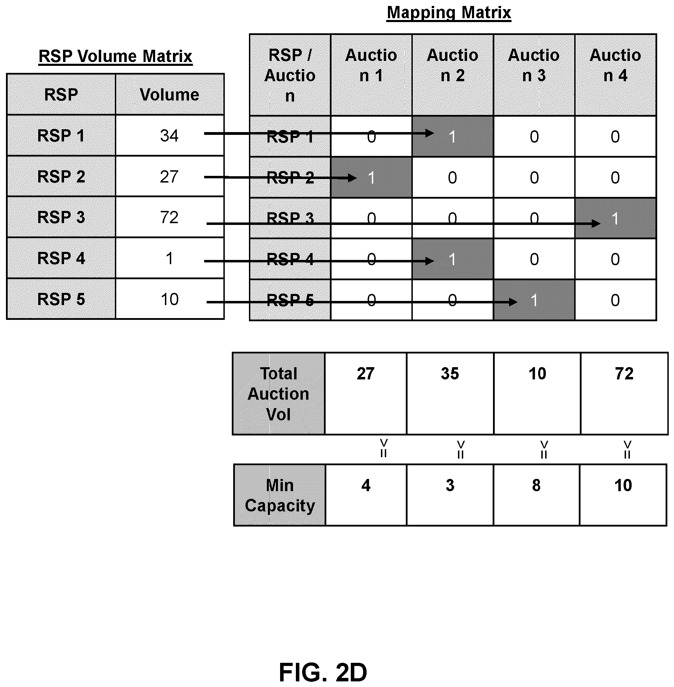

FIG. 2D illustrates an example of capacity constraints being kept outside the objective function. For example, in such a case the objective function may comprise:

$$\underset{max}{Objective} = \sum_{i=1}^{i=5} \sum_{j=1}^{j=4} (x_{ij}*NR_{ij})*SM_{ij}*DM_{ij}*TM_{ij}$$

$$Subject\ to:\ \ x_{ij}:\ \{0,1\}\ and\ \sum_{j=1}^{j=4} x_{ij} = 1\ \ and\ \ \sum_{i=1}^{i=5} x_{ij}*rsp\_vol_i >= min\_auction\_capacity_j \quad \forall\ j \in \{1,2,3,4\}$$

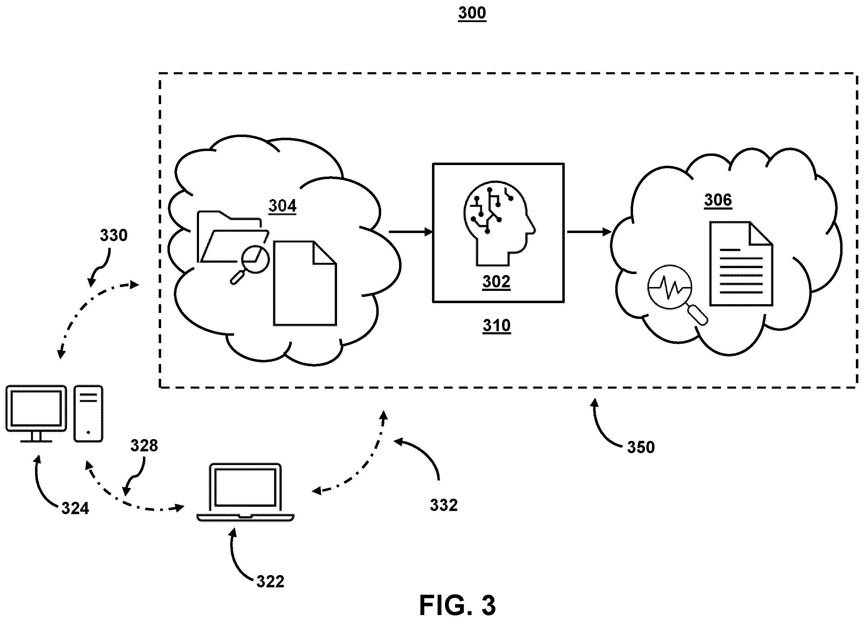

FIG. 3 shows illustrative components for a system used to dynamically selecting network allocation sites, in accordance with one or more embodiments. For example, FIG. 3 may show illustrative components for dynamically selecting geographic locations for network allocation sites of distributed resources in a cloud computing network. As shown in FIG. 3, system 300 may include mobile device 322 and user terminal 324. While shown as a smartphone and personal computer, respectively, in FIG. 3, it should be noted that mobile device 322 and user terminal 324 may be any computing device, including, but not limited to, a laptop computer, a tablet computer, a hand-held computer, and other computer equipment (e.g., a server), including "smart," wireless, wearable, and/or mobile devices. FIG. 3 also includes cloud components 310. Cloud components 310 may alternatively be any computing device as described above, and may include any type of mobile terminal, fixed terminal, or other device. For example, cloud components 310 may be implemented as a cloud computing system, and may feature one or more component devices. It should also be noted that system 300 is not limited to three devices. Users may, for instance, utilize one or more devices to interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational response, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include model 302, which may be a machine learning model, artificial intelligence model, etc. (which may be referred collectively as "models" herein). Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., recommend a network allocation site, determine the efficiency of a distributed resource, etc.).

In a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., recommend a network allocation site, determine the efficiency of a distributed resource, etc.).

In some embodiments, the model (e.g., model 302) may automatically perform actions based on outputs 306. In some embodiments, the model (e.g., model 302) may not perform any actions. The output of the model (e.g., model 302) may be used to generate a recommendation.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as standard for external integration.

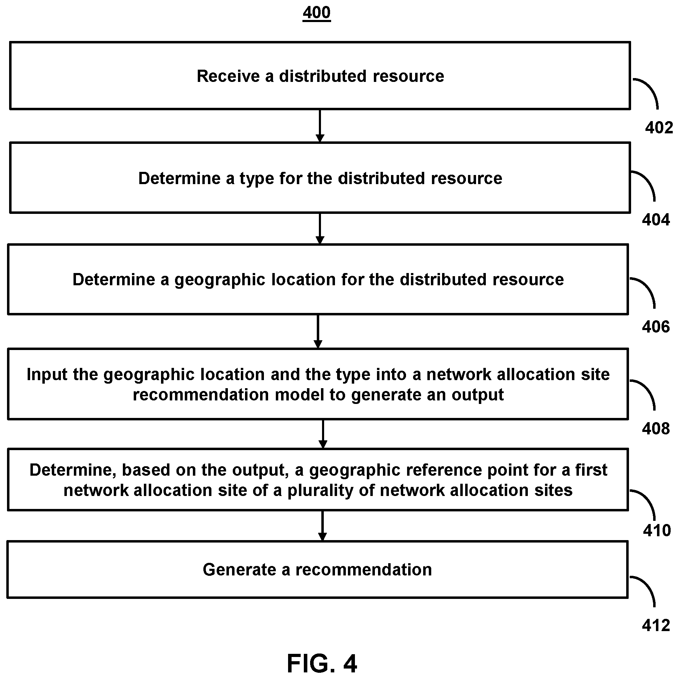

FIG. 4 shows a flowchart of the steps involved in dynamically selecting network allocation sites, in accordance with one or more embodiments. For example, the system may use process 400 (e.g., as implemented on one or more system components described above) in order to dynamically selecting geographic locations for network allocation sites of distributed resources in a cloud computing network.

At step 402, process 400 (e.g., using one or more components described above) receives a distributed resource. For example, the system may receive a first distributed resource, of a plurality of distributed resources, for allocation, wherein the first distributed resource comprises a first cloud computing resource used by a first user. A system may receive a subset of distributed resources available for allocation through a process that typically involves resource discovery, selection, and assignment. Initially, the system may perform resource discovery by querying a central directory or registry that maintains a list of all available resources along with their characteristics, such as capacity, location, and current utilization. This directory can be updated in real-time to reflect the dynamic state of resources across the network. Once the available resources are identified, the system evaluates them based on predefined criteria or policies, which may include factors like performance requirements, cost efficiency, geographic proximity, and specific resource capabilities. This evaluation helps to filter and select the most suitable subset of resources that meet the specific needs of the task or application at hand. After selection, the system allocates these resources to the requesting entity. This allocation can be managed by a resource scheduler or orchestrator, which ensures that the resources are assigned efficiently and that their utilization is balanced to prevent overloading any single resource. The orchestrator might also implement mechanisms for scaling resources up or down based on demand, ensuring optimal performance and cost-effectiveness. Throughout this process, the system continuously monitors the status of the resources and the workload to make any necessary adjustments, reallocating resources as needed to maintain efficiency and meet service level agreements. This dynamic and responsive approach ensures that the system can effectively manage and distribute the available resources to meet the varying demands of users and applications.

In some embodiments, the system may receive the first distributed resource, of the plurality of distributed resources, for allocation by receiving a first request from a first user for the first distributed resource and, in response to receiving the first request, query the first user for the first geographic location. In some embodiments, the system may receive the first distributed resource, of the plurality of distributed resources, for allocation by receiving a first request for allocating the first distributed resource, and, in response to receiving the first request, use the first request to determine the first geographic location and the first type. For example, the system may receive a first distributed resource for allocation by first handling a request from a user. When the first user submits a request for the first distributed resource, the system initiates a query to gather necessary information for proper allocation. Upon receiving this initial request, the system recognizes the need for additional details regarding the geographic location where the resource will be deployed. In response to the request, the system queries the first user for the specific geographic location. This query can be presented through various means such as a prompt in a user interface, a form, or a series of guided questions designed to collect precise location data. The user is asked to input relevant geographic details, which might include coordinates, an address, or a region where the resource is required. Once the user provides the geographic location, the system processes this input to ensure it is valid and complete. The geographic information is then linked to the initial resource request, creating a comprehensive allocation request that includes both the type of resource and the intended deployment location.

At step 404, process 400 (e.g., using one or more components described above) determines a geographic location for the distributed resource. For example, the system may determine a first geographic location for the first distributed resource. The system collects data from users (which may include a user of a distributed resource, a provider of a distributed resource, and/or the distributed resource itself), including their geographic locations, either through direct input, IP geolocation, GPS data, or other location-detection methods. This data helps identify where the demand for resources is coming from.

At step 406, process 400 (e.g., using one or more components described above) determines a type for the distributed resource. For example, the system may determine a first type for the first distributed resource. For example, the system begins by collecting detailed information about the user's needs, the distributed resource (and its characteristics). This may include the type of tasks to be performed, performance requirements, expected workload, budget constraints, and specific resource preferences (e.g., CPU, memory, storage) as well as characteristics about the resource itself. Users may provide this information directly, or the system might infer it from the nature of the application, information already received about the good and/or service, and/or service being requested. The system may characterize the tasks or workloads to understand what types of resources are most suitable. For example, compute-intensive tasks might require high-performance CPUs or GPUs, while data-intensive tasks might need ample storage or high-speed network capabilities. This step ensures that the resource type matches the specific demands of the workload. Using the information from the user requirements analysis and task characterization, the system filters the available resources to identify those that meet the specified criteria. This matching process involves comparing the requirements with the resource capabilities, ensuring compatibility and suitability.

At step 408, process 400 (e.g., using one or more components described above) inputs the geographic location and the type into a network allocation site recommendation model to generate an output. For example, the system may input the first geographic location and the first type into a network allocation site recommendation model to generate a first output, wherein the network allocation site recommendation model uses a linear programming algorithm, wherein an objective function of the linear programming algorithm comprises a maximum aggregated allocation efficiency for a subset of the plurality of distributed resources at a proposed geographic location for a proposed network allocation site, and wherein a first constraint for the objective function comprises a minimum net efficiency for each distributed resource in the subset of the plurality of distributed resources. In some embodiments, a first decision variable for the objective function may comprise a predicted net efficiency for each distributed resource in the subset of the plurality of distributed resources. In some embodiments, a second decision variable for the objective function may comprise a distance for each distributed resource in the subset of the plurality of distributed resources from a respective current location to the proposed geographic location. In some embodiments, a second constraint for the objective function may comprise a maximum distance for each distributed resource in the subset of the plurality of distributed resources from a respective current location to the proposed geographic location. In some embodiments, a third constraint for the objective function may comprise a maximum capacity for the proposed network allocation site, wherein the maximum capacity comprises a maximum size of the subset. In some embodiments, a fourth constraint for the objective function may comprises a minimum aggregated net efficiency the subset of the plurality of distributed resources.

For example, the system may determine an output using a network allocation site recommendation model by leveraging a linear programming algorithm, based on the input of a geographic location of a distributed resource and the type of that resource. The objective function of this linear programming algorithm may aim to maximize the aggregated allocation efficiency for a subset of distributed resources at a proposed geographic location for a network allocation site. This is achieved through the optimization of two key decision variables: the predicted net efficiency of each distributed resource and the distance from the current location to the proposed site.

The first decision variable, predicted net efficiency, may estimate the performance and productivity gains (e.g., net retention) that each resource can provide if allocated to the proposed site. The second decision variable, distance, measures the spatial displacement required to move each resource from its current position to the new site. To ensure the feasibility and effectiveness of the allocation, the model imposes two constraints. The first constraint requires that the net efficiency of each resource meets a minimum threshold, guaranteeing that only resources that can contribute significantly to the overall efficiency are considered. The second constraint limits the maximum allowable distance each resource can be relocated, ensuring that the logistical and operational costs remain manageable.

By inputting the geographic location and type of distributed resource, the system applies the linear programming algorithm to solve for the optimal allocation that maximizes aggregated efficiency. The model processes these inputs and constraints to recommend the best possible site for network allocation, balancing the trade-offs between efficiency gains and relocation distances. This ensures that the resources are distributed in a manner that enhances overall performance while adhering to practical constraints.

In some embodiments, the system may use a variety of models and/or algorithms for the recommendation model. For example, the system may use one or more artificial intelligence models that have been trained to make recommendations. The system may retrieve historical efficiency data for the plurality of distributed resources. The system may generate training data for the network allocation site recommendation model based on the historical efficiency data. The system may train the network allocation site recommendation model using the training data.

For example, the system may use one or more artificial intelligence models trained to make recommendations by leveraging historical data and advanced machine learning techniques. As one example, initially, the system retrieves historical efficiency data for the plurality of distributed resources, encompassing past performance metrics, usage patterns, and outcomes of previous allocations. This historical data forms the foundation for creating a robust training dataset. Next, the system generates training data for the network allocation site recommendation model based on the collected historical efficiency data. This involves preprocessing the data to ensure it is clean, structured, and relevant. The preprocessing steps may include normalizing data values, handling missing or outlier entries, and transforming categorical data into a suitable numerical format. The resulting training dataset captures various factors influencing resource efficiency, such as geographic locations, resource types, environmental conditions, and specific workload characteristics. With the training data prepared, the system then proceeds to train the network allocation site recommendation model. This training process involves feeding the training data into machine learning algorithms, such as linear regression, decision trees, or neural networks, depending on the complexity and requirements of the recommendation task. The model learns to identify patterns and correlations within the data, enabling it to predict the efficiency and suitability of different resource allocations in various scenarios. During training, the model undergoes multiple iterations of optimization, where it adjusts its parameters to minimize prediction errors and improve accuracy. Techniques like cross-validation and hyperparameter tuning are employed to ensure the model generalizes well to new, unseen data. Once trained, the model can effectively analyze current conditions and make informed recommendations for resource allocation. When a new request for resource allocation is received, the system utilizes the trained model to predict the optimal network allocation site. The model evaluates the current request's specifics against its learned knowledge from historical data, considering factors such as predicted efficiency and geographic proximity. By doing so, the system generates recommendations that optimize resource usage, enhance performance, and meet user requirements efficiently.

In some embodiments, generating the first output may comprise the system generating a matrix based on the plurality of network allocation sites and the plurality of distributed resources and populating the matrix with a respective allocation efficiency each of the plurality of distributed resources at each of the plurality of network allocation sites. For example, the system may define a matrix where the rows represent the different network allocation sites and the columns represent the various distributed resources. Each cell in this matrix corresponds to a specific combination of a resource and an allocation site, and it will be populated with the respective allocation efficiency for that pairing. To populate this matrix, the system first collects data on the allocation efficiency of each distributed resource at each network allocation site. This data can be derived from historical performance metrics, predictive models, and other relevant factors that influence efficiency, such as geographic location, resource capabilities, and workload requirements. The system may use machine learning models that have been trained on historical data to estimate these efficiencies accurately. Once the necessary data is gathered, the system calculates the allocation efficiency for each resource-site pair. This involves running simulations or applying pre-trained predictive models to determine how well each resource would perform if allocated to each site. The resulting efficiency values reflect the expected performance, taking into account factors like latency, resource utilization, cost, and any site-specific constraints or advantages. The calculated efficiencies are then used to populate the matrix. Each cell is filled with the respective allocation efficiency value, providing a comprehensive view of how each distributed resource would perform at each network allocation site. This matrix serves as a critical tool for decision-making, allowing the system to compare different allocation scenarios and identify the optimal distribution of resources. With the matrix complete, the system can generate an output that includes recommendations for resource allocation. By analyzing the matrix, the system identifies the combinations that maximize overall efficiency, meet performance targets, and adhere to any constraints or policies. These recommendations are then presented to the user or used by automated processes to allocate resources effectively, ensuring optimal utilization and performance across the network.

In some embodiments, the system may generate a first output by generating a matrix based on the plurality of network allocation sites and the plurality of distributed resources and populating the matrix with a respective distance between each of the plurality of distributed resources and each of the plurality of network allocation sites. The system may define a matrix where the rows represent the different network allocation sites and the columns represent the various distributed resources. Each cell in this matrix corresponds to a specific combination of a resource and an allocation site, and it will be populated with the distance between that resource and site. To populate this matrix, the system first gathers the geographic coordinates or addresses of each distributed resource and each network allocation site. Using this location data, the system calculates the distances between each resource and each site. This can be done using various methods, such as Euclidean distance for simple straight-line calculations, or more sophisticated geospatial algorithms that consider real-world factors like road networks and travel time. Once the distance calculations are performed, the system populates the matrix with these values. Each cell is filled with the calculated distance between the corresponding distributed resource and network allocation site. This results in a matrix where each entry provides a clear measure of how far each resource is from each potential allocation site. The completed matrix offers a comprehensive overview of the spatial relationships between resources and sites. This information is crucial for making informed decisions about resource allocation, as distance can significantly impact factors like latency, transportation costs, and overall efficiency. With the matrix populated with distance values, the system generates the first output by analyzing the matrix to identify optimal allocation strategies. This analysis can involve identifying the closest sites for each resource to minimize transportation costs and latency, or balancing distances to distribute resources evenly across sites. The output can then be used to guide allocation decisions, ensuring that resources are positioned in a manner that optimizes network performance and operational efficiency. By systematically calculating and organizing distance data into a matrix, the system provides a valuable tool for strategic planning and resource management, enabling efficient and effective allocation of distributed resources across multiple network sites.

In some embodiments, generating a first output may comprise the system generating a matrix based on the plurality of network allocation sites and the plurality of distributed resources and applying a Boolean mask to values populated in the matrix. For example, once the matrix is populated with the necessary data, the system applies a Boolean mask to it. A Boolean mask is essentially a matrix of the same dimensions, where each cell contains a Boolean value (true or false). These values are used to selectively filter or highlight certain entries in the original matrix based on predefined conditions or criteria. The criteria for the Boolean mask can vary depending on the specific needs and goals of the resource allocation process. For example, the mask could be used to identify and retain only those resource-site pairs where the distance is below a certain threshold, indicating feasible allocation points. Alternatively, the mask could highlight pairs that meet minimum efficiency standards or adhere to specific policy constraints. To apply the Boolean mask, the system performs an element-wise multiplication of the Boolean mask matrix with the original data matrix. This operation filters the matrix, retaining only the values that correspond to 'true' entries in the Boolean mask and nullifying or discarding the values corresponding to 'false' entries. The result is a filtered matrix that only includes the data points that meet the specified conditions. The system then generates the first output by analyzing the filtered matrix. This output can take various forms, such as a list of recommended resource-site allocations, a visual representation of feasible allocation sites, or a detailed report highlighting the optimal choices based on the applied criteria. The output enables decision-makers to quickly identify and focus on the most viable resource allocation options, ensuring efficient and effective use of the distributed resources. By generating a matrix and applying a Boolean mask, the system efficiently filters and prioritizes data, providing a clear and actionable output that supports strategic planning and optimal resource management.

At step 410, process 400 (e.g., using one or more components described above) determines, based on the output, a geographic reference point for a first network allocation site of a plurality of network allocation sites. For example, the system may determine, based on the first output, a first geographic reference point for a first network allocation site of a plurality of network allocation sites, wherein each of the plurality of network allocation sites comprises a respective geographic reference point for allocating one or more of a plurality of distributed resources.

For example, the system may determine a first geographic reference point (e.g., a centroid for a cluster of distributed resources) for a first network allocation site, based on the output of a network allocation site recommendation model, by analyzing the proposed locations and optimizing the allocation of distributed resources. The network allocation site recommendation model provides suggested geographic locations for network allocation sites, each associated with a respective geographic reference point. This model incorporates factors such as the predicted net efficiency of each resource, the distance from current locations to proposed sites, and specific constraints on efficiency and distance.

To determine the first geographic reference point, the system first evaluates the outputs of the recommendation model, which includes proposed geographic locations for the network allocation sites. The system then identifies the optimal site by considering the objective function of the linear programming algorithm used by the model. This function aims to maximize aggregated allocation efficiency across all proposed sites, ensuring that the selected locations offer the highest overall performance and resource utilization. The system examines the predicted net efficiency for each resource at the proposed sites and the distances required to relocate resources to these sites. It ensures that each proposed site meets the minimum net efficiency constraint, confirming that only locations contributing significantly to the overall efficiency are considered. Additionally, it verifies that the relocation distances are within the maximum allowable limits, maintaining manageable logistical and operational costs.

Once the system has assessed all proposed sites and their respective geographic reference points, it selects the first network allocation site by identifying the location that best meets the objective function criteria. This site serves as the first geographic reference point for allocating distributed resources, ensuring optimal performance and adherence to constraints. The selected reference point allows the system to allocate resources efficiently, maximizing the benefits of distributed resource deployment while considering practical limitations.

At step 412, process 400 (e.g., using one or more components described above) generates a recommendation. For example, the system may generate for display, on a user interface, a first recommendation for using the first network allocation site for the first distributed resource based on the first geographic reference point. In some embodiments, the system may generate a recommendation that includes a mapping related to a plurality of distributed resources and/or network allocation sites. For example, the system may determine a second distributed resource corresponds to the first type (e.g., the same type as the first distributed resource). The system may then input the second geographic location and the first type into the network allocation site recommendation model to generate a second output. The system may generate for display, on the user interface, a second recommendation for using the first network allocation site for the second distributed resource based on the second output.

In some embodiments, the system may generate a recommendation for using the first network allocation site for the first distributed resource, based on the first geographic reference point, by following a series of steps that culminate in displaying this recommendation on a user interface. Once the network allocation site recommendation model has identified the optimal geographic reference point for the first site, the system processes this information to create a user-friendly display. Firstly, the system gathers all relevant data, including the first geographic reference point, the specifics of the first distributed resource, and the rationale behind the recommendation (such as predicted net efficiency and distance considerations). This data is then organized into a coherent format that highlights the key elements of the recommendation. Next, the system prepares a visual representation of this information. This might include a map showing the first geographic reference point, annotations detailing the benefits of using this location, and any relevant metrics such as efficiency gains and distance from the current location. The visual representation is designed to be intuitive, enabling users to quickly understand the recommendation and its underlying rationale. The system then integrates this visual representation into the user interface. This interface is typically interactive, allowing users to explore the recommendation in greater detail. Features might include zooming in on the map, clicking on elements to view additional information, and accessing comparative data for other potential sites. Finally, the system generates the display by rendering the prepared visual elements on the user interface. It ensures that the information is clear, accessible, and actionable. Users can then view the recommendation, understand the reasoning behind it, and make informed decisions based on the provided data. This process ensures that the recommendation for using the first network allocation site for the first distributed resource is effectively communicated and easily accessible to users.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:

1. A method for dynamically selecting geographic locations for network allocation sites of distributed resources.

2. The method of the preceding embodiment, further comprising: receiving a first distributed resource, of a plurality of distributed resources, for allocation, wherein the first distributed resource comprises a first cloud computing resource used by a first user; determining a first geographic location for the first distributed resource; determining a first type for the first distributed resource; determining a first geographic reference point for a first network allocation site of a plurality of network allocation sites, wherein each of the plurality of network allocation sites comprises a respective geographic reference point for allocating one or more of a plurality of distributed resources; inputting the first geographic location and the first type into a network allocation site recommendation model to generate a first output, wherein the network allocation site recommendation model uses a linear programming algorithm, and wherein an objective function of the linear programming algorithm comprises a maximum aggregated allocation efficiency for a subset of the plurality of distributed resources at a proposed geographic location for a proposed network allocation site, and wherein a first constraint for the objective function comprises a minimum net efficiency for each distributed resource in the subset of the plurality of distributed resources; determining, based on the first output, a first geographic reference point for a first network allocation site of a plurality of network allocation sites, wherein each of the plurality of network allocation sites comprises a respective geographic reference point for allocating one or more of a plurality of distributed resources; and generating for display, on a user interface, a first recommendation for using the first network allocation site for the first distributed resource based on the first geographic reference point.

3. The method of any one of the preceding embodiments, wherein receiving the first distributed resource, of the plurality of distributed resources, for allocation further comprises: receiving a first request from a first user for the first distributed resource; and in response to receiving the first request, querying the first user for the first geographic location.

4. The method of any one of the preceding embodiments, wherein receiving the first distributed resource, of the plurality of distributed resources, for allocation further comprises: receiving a first request for allocating the first distributed resource; and in response to receiving the first request, using the first request to determine the first geographic location and the first type.

5. The method of any one of the preceding embodiments, wherein a first decision variable for the objective function comprises a predicted net efficiency for each distributed resource in the subset of the plurality of distributed resources.

6. The method of any one of the preceding embodiments, wherein a second decision variable for the objective function comprises a distance for each distributed resource in the subset of the plurality of distributed resources from a respective current location to the proposed geographic location.

7. The method of any one of the preceding embodiments, wherein a second constraint for the objective function comprises a maximum distance for each distributed resource in the subset of the plurality of distributed resources from a respective current location to the proposed geographic location.

8. The method of any one of the preceding embodiments, wherein a third constraint for the objective function comprises a maximum capacity for the proposed network allocation site, wherein the maximum capacity comprises a maximum size of the subset.

9. The method of any one of the preceding embodiments, wherein a fourth constraint for the objective function comprises a comprises a minimum aggregated net efficiency the subset of the plurality of distributed resources.

10. The method of any one of the preceding embodiments, wherein determining the first geographic location for the first distributed resource further comprises: determining a geographic address corresponding to a first user; and determining the first geographic location based on the geographic address.

11. The method of any one of the preceding embodiments, wherein determining the first type for the first distributed resource further comprises: retrieving a plurality of resource types; determining a first characteristic of the first distributed resource; and selecting the first type from the plurality of resource types based on the first characteristic.

12. The method of any one of the preceding embodiments, further comprising: determining a second geographic location for a second distributed resource; determining the second distributed resource corresponds to the first type; inputting the second geographic location and the first type into the network allocation site recommendation model to generate a second output; and generating for display, on the user interface, a second recommendation for using the first network allocation site for the second distributed resource.

13. The method of any one of the preceding embodiments, further comprising: retrieving historical efficiency data for the plurality of distributed resources; generating training data for the network allocation site recommendation model based on the historical efficiency data; and training the network allocation site recommendation model using the training data.

14. The method of any one of the preceding embodiments, wherein generating the first output comprises: generating a matrix based on the plurality of network allocation sites and the plurality of distributed resources; and populating the matrix with a respective allocation efficiency each of the plurality of distributed resources at each of the plurality of network allocation sites.

15. The method of any one of the preceding embodiments, wherein generating the first output comprises: generating a matrix based on the plurality of network allocation sites and the plurality of distributed resources; and populating the matrix with a respective distance between each of the plurality of distributed resources and each of the plurality of network allocation sites.

16. The method of any one of the preceding embodiments, wherein generating the first output comprises: generating a matrix based on the plurality of network allocation sites and the plurality of distributed resources; and applying a Boolean mask to values populated in the matrix.

17. One or more non-transitory, computer-readable mediums storing instructions that, when executed by a data processing apparatus, cause the data processing apparatus to perform operations comprising those of any of embodiments 1-16.

18. A system comprising one or more processors; and memory storing instructions that, when executed by the processors, cause the processors to effectuate operations comprising those of any of embodiments 1-16.

19. A system comprising means for performing any of embodiments 1-16.

Various examples are set out in the following numbered paragraphs (NPs):

NP 1. A system for dynamically selecting geographic locations for network allocation sites of distributed resources in a cloud computing network, the system comprising:

one or more processors: and
one or more non-transitory, computer-readable mediums, comprising instructions that, when executed by one or more processors, cause operations comprising:

receiving a first distributed resource, of a plurality of distributed resources, for allocation, wherein the first distributed resource comprises a first cloud computing resource used by a first user;
determining a first geographic location for the first distributed resource;
determining a first type for the first distributed resource;
inputting the first geographic location and the first type into a network allocation site recommendation model to generate a first output, wherein the network allocation site recommendation model uses a linear programming algorithm, and wherein an objective function of the linear programming algorithm comprises a maximum aggregated allocation efficiency for a subset of the plurality of distributed resources at a proposed geographic location for a proposed network allocation site, wherein a first decision variable for the objective function comprises a predicted net efficiency for each distributed resource in the subset of the plurality of distributed resources, wherein a second decision variable for the objective function comprises a distance for each distributed resource in the subset of the plurality of distributed resources from a respective current location to the proposed geographic location, wherein a first constraint for the objective function comprises a minimum net efficiency for each distributed resource in the subset of the plurality of distributed resources, and wherein a second constraint for the objective function comprises a maximum distance for each distributed resource in the subset of the plurality of distributed resources from a respective current location to the proposed geographic location;
determining, based on the first output, a first geographic reference point for a first network allocation site of a plurality of network allocation sites, wherein each of the plurality of network allocation sites comprises a respective geographic reference point for allocating one or more of a plurality of distributed resources;
generating for display, on a user interface, a first recommendation for using the first network allocation site for the first distributed resource based on the first geographic reference point.

NP 2. A method for dynamically selecting geographic locations for network allocation sites of distributed resources, the method comprising:

receiving a first distributed resource, of a plurality of distributed resources, for allocation, wherein the first distributed resource comprises a first cloud computing resource used by a first user;

15

determining a first geographic location for the first distributed resource;

determining a first type for the first distributed resource;

inputting the first geographic location and the first type into a network allocation site recommendation model to generate a first output, wherein the network allocation site recommendation model uses a linear programming algorithm, wherein an objective function of the linear programming algorithm comprises a maximum aggregated allocation efficiency for a subset of the plurality of distributed resources at a proposed geographic location for a proposed network allocation site, and wherein a first constraint for the objective function comprises a minimum net efficiency for each distributed resource in the subset of the plurality of distributed resources;

determining, based on the first output, a first geographic reference point for a first network allocation site of a plurality of network allocation sites, wherein each of the plurality of network allocation sites comprises a respective geographic reference point for allocating one or more of a plurality of distributed resources; and

generating for display, on a user interface, a first recommendation for using the first network allocation site for the first distributed resource based on the first geographic reference point.

NP 3. The method of NP 2, wherein receiving the first distributed resource, of the plurality of distributed resources, for allocation further comprises:

receiving a first request from a first user for the first distributed resource; and

in response to receiving the first request, querying the first user for the first geographic location.

NP 4. The method of NP 2, wherein receiving the first distributed resource, of the plurality of distributed resources, for allocation further comprises:

receiving a first request for allocating the first distributed resource; and

in response to receiving the first request, using the first request to determine the first geographic location and the first type.

NP 5. The method of NP 2, wherein a first decision variable for the objective function comprises a predicted net efficiency for each distributed resource in the subset of the plurality of distributed resources.

NP 6. The method of NP 2, wherein a second decision variable for the objective function comprises a distance for each distributed resource in the subset of the plurality of distributed resources from a respective current location to the proposed geographic location.

NP 7. The method of NP 2, wherein a second constraint for the objective function comprises a maximum distance for each distributed resource in the subset of the plurality of distributed resources from a respective current location to the proposed geographic location.

NP 8. The method of NP 2, wherein a third constraint for the objective function comprises a maximum capacity for the proposed network allocation site, wherein the maximum capacity comprises a maximum size of the subset.

NP 9. The method of NP 2, wherein a fourth constraint for the objective function comprises a minimum aggregated net efficiency the subset of the plurality of distributed resources.

NP 10. The method of NP 2, wherein determining the first geographic location for the first distributed resource further comprises:

determining a geographic address corresponding to a first user; and

determining the first geographic location based on the geographic address.

NP 11. The method of NP 2, wherein determining the first type for the first distributed resource further comprises:

retrieving a plurality of resource types;

determining a first characteristic of the first distributed resource; and

selecting the first type from the plurality of resource types based on the first characteristic.

NP 12. The method of NP 2, further comprising:

determining a second distributed resource corresponds to the first type;

inputting a second geographic location and the first type into the network allocation site recommendation model to generate a second output; and

generating for display, on the user interface, a second recommendation for using the first network allocation site for the second distributed resource based on the second output.

NP 13. The method of NP 2, further comprising:

retrieving historical efficiency data for the plurality of distributed resources;

generating training data for the network allocation site recommendation model based on the historical efficiency data; and

training the network allocation site recommendation model using the training data.

NP 14. The method of NP 2, wherein generating the first output comprises:

generating a matrix based on the plurality of network allocation sites and the plurality of distributed resources; and

populating the matrix with a respective allocation efficiency each of the plurality of distributed resources at each of the plurality of network allocation sites.

NP 15. The method of NP 2, wherein generating the first output comprises:

generating a matrix based on the plurality of network allocation sites and the plurality of distributed resources; and

populating the matrix with a respective distance between each of the plurality of distributed resources and each of the plurality of network allocation sites.

NP 16. The method of NP 2, wherein generating the first output comprises:

generating a matrix based on the plurality of network allocation sites and the plurality of distributed resources; and

applying a Boolean mask to values populated in the matrix.

NP 17. One or more non-transitory, computer-readable mediums, comprising instructions that, when executed by one or more processors, cause operations comprising:

receiving a first distributed resource, of a plurality of distributed resources, for allocation, wherein the first distributed resource comprises a first cloud computing resource used by a first user;

determining a first geographic location for the first distributed resource;

determining a first type for the first distributed resource;

inputting the first geographic location and the first type into a network allocation site recommendation model to generate a first output, wherein the network allocation site recommendation model uses a linear programming algorithm, and wherein an objective function of the linear programming algorithm comprises a maximum aggregated allocation efficiency for a subset of the plurality of distributed resources at a proposed geographic location for a proposed network allocation site;

determining, based on the first output, a first geographic reference point for a first network allocation site of a plurality of network allocation sites, wherein each of the plurality of network allocation sites comprises a respective geographic reference point for allocating one or more of a plurality of distributed resources; and

generating for display, on a user interface, a first recommendation for using the first network allocation site for the first distributed resource based on the first geographic reference point.

NP 18. The one or more non-transitory, computer-readable mediums of NP 17, wherein receiving the first distributed resource, of the plurality of distributed resources, for allocation further comprises:

receiving a first request from a first user for the first distributed resource; and

in response to receiving the first request, querying the first user for the first geographic location.

NP 19. The one or more non-transitory, computer-readable mediums of NP 17, wherein receiving the first distributed resource, of the plurality of distributed resources, for allocation further comprises:

receiving a first request for allocating the first distributed resource; and

in response to receiving the first request, using the first request to determine the first geographic location and the first type.

NP 20. The one or more non-transitory, computer-readable mediums of NP 17, wherein a first decision variable for the objective function comprises a predicted net efficiency for each distributed resource in the subset of the plurality of distributed resources.

**Claims**

1. A method for dynamically selecting geographic locations for network allocation sites of distributed resources, the method comprising:

   receiving a first distributed resource, of a plurality of distributed resources, for allocation, wherein the first distributed resource comprises a first cloud computing resource used by a first user;
   determining a first geographic location for the first distributed resource;
   determining a first type for the first distributed resource;
   inputting the first geographic location and the first type into a network allocation site recommendation model to generate a first output, wherein the network allocation site recommendation model uses a linear programming algorithm, wherein an objective function of the linear programming algorithm comprises a maximum aggregated allocation efficiency for a subset of the plurality of distributed resources at a proposed geographic location for a proposed network allocation site;
   determining, based on the first output, a first geographic reference point for a first network allocation site of a plurality of network allocation sites, wherein each of the plurality of network allocation sites comprises a respective geographic reference point for allocating one or more of a plurality of distributed resources; and
   generating for display, on a user interface, a first recommendation for using the first network allocation site for the first distributed resource based on the first geographic reference point.

2. The method of claim 1, wherein a first constraint for the objective function comprises a minimum net efficiency for each distributed resource in the subset of the plurality of distributed resources.

3. The method of any preceding claim, wherein receiving the first distributed resource, of the plurality of distributed resources, for allocation further comprises:

   receiving a first request from a first user for the first distributed resource; and
   in response to receiving the first request, querying the first user for the first geographic location.

4. The method of any preceding claim, wherein receiving the first distributed resource, of the plurality of distributed resources, for allocation further comprises:

   receiving a first request for allocating the first distributed resource; and
   in response to receiving the first request, using the first request to determine the first geographic location and the first type.

5. The method of any preceding claim, wherein:

   (a) a first decision variable for the objective function comprises a predicted net efficiency for each distributed resource in the subset of the plurality of distributed resources; and/or
   (b) a second decision variable for the objective function comprises a distance for each distributed resource in the subset of the plurality of distributed resources from a respective current location to the proposed geographic location.

6. The method of any preceding claim, wherein:

   (a) a second constraint for the objective function comprises a maximum distance for each distributed resource in the subset of the plurality of distributed resources from a respective current location to the proposed geographic location; and/or
   (b) a third constraint for the objective function comprises a maximum capacity for the proposed network allocation site, wherein the maximum capacity comprises a maximum size of the subset; and/or
(c) a fourth constraint for the objective function comprises a minimum aggregated net efficiency the subset of the plurality of distributed resources.

7. The method of any preceding claim, wherein determining the first geographic location for the first distributed resource further comprises:

> determining a geographic address corresponding to a first user; and
> determining the first geographic location based on the geographic address.

8. The method of any preceding claim, wherein determining the first type for the first distributed resource further comprises:

> retrieving a plurality of resource types;
> determining a first characteristic of the first distributed resource; and
> selecting the first type from the plurality of resource types based on the first characteristic.

9. The method of any preceding claim, further comprising:

> determining a second distributed resource corresponds to the first type;
> inputting a second geographic location and the first type into the network allocation site recommendation model to generate a second output; and
> generating for display, on the user interface, a second recommendation for using the first network allocation site for the second distributed resource based on the second output.

10. The method of any preceding claim, further comprising:

> retrieving historical efficiency data for the plurality of distributed resources;
> generating training data for the network allocation site recommendation model based on the historical efficiency data; and
> training the network allocation site recommendation model using the training data.

11. The method of any preceding claim, wherein generating the first output comprises:

> generating a matrix based on the plurality of network allocation sites and the plurality of distributed resources; and
> (a) populating the matrix with a respective allocation efficiency each of the plurality of distributed resources at each of the plurality of network allocation sites, or
> (b) populating the matrix with a respective distance between each of the plurality of distributed resources and each of the plurality of network allocation sites.

12. The method of any preceding claim, wherein generating the first output comprises:

> generating a matrix based on the plurality of network allocation sites and the plurality of distributed resources; and
> applying a Boolean mask to values populated in the matrix.

13. A system arranged to carry out a method according to any one of the preceding claims.

14. One or more non-transitory, computer-readable mediums, comprising instructions that, when executed by one or more processors, cause the processors to carry out a method according to any one of the preceding claims.

FIG. 1

## Mapping Matrix

| RSP / Auction | Auction 1 | Auction 2 | ... | Auction j |
|---|---|---|---|---|
| RSP 1 | $X_{11}$ | $X_{12}$ | ... | $X_{1j}$ |
| RSP 2 | $X_{21}$ | $X_{22}$ | ... | $X_{2j}$ |
| RSP 3 | $X_{31}$ | $X_{32}$ | ... | $X_{3j}$ |
| ... | ... | ... | ... | ... |
| RSP i | $X_{i1}$ | $X_{i2}$ | ... | $X_{ij}$ |

## Net Retention Matrix

| RSP / Auction | Auction 1 | Auction 2 | ... | Auction j |
|---|---|---|---|---|
| RSP 1 | $NR_{11}$ | $NR_{12}$ | ... | $NR_{1j}$ |
| RSP 2 | $NR_{21}$ | $NR_{22}$ | ... | $NR_{2j}$ |
| RSP 3 | $NR_{31}$ | $NR_{32}$ | ... | $NR_{3j}$ |
| ... | ... | ... | ... | ... |
| RSP i | $NR_{i1}$ | $NR_{i2}$ | ... | $NR_{ij}$ |

## FIG. 2A

### Example Mapping

| RSP / Auction | Auction 1 | Auction 2 | Auction 3 | Auction 4 |
|---|---|---|---|---|
| RSP 1 | 0 | 1 | 0 | 0 |
| RSP 2 | 1 | 0 | 0 | 0 |
| RSP 3 | 0 | 0 | 0 | 1 |
| RSP 4 | 0 | 1 | 0 | 0 |
| RSP 5 | 0 | 0 | 1 | 0 |

### Example Net Retention Matrix

| RSP / Auction | Auction 1 | Auction 2 | Auction 3 | Auction 4 |
|---|---|---|---|---|
| RSP 1 | 1.08 | 1.03 | 0.99 | 0.87 |
| RSP 2 | 1.02 | 1.10 | 1.09 | 1.00 |
| RSP 3 | 0.82 | 0.87 | 1.21 | 1.05 |
| RSP 4 | 1.15 | 1.17 | 1.12 | 1.19 |
| RSP 5 | 1.05 | 0.97 | 0.99 | 1.07 |

## FIG. 2B

## Distance Matrix (in Miles)

| RSP / Auction | Auction 1 | Auction 2 | Auction 3 | Auction 4 |
|---|---|---|---|---|
| RSP 1 | 250 | 300 | 350 | 650 |
| RSP 2 | 275 | 475 | 510 | 475 |
| RSP 3 | 660 | 790 | 50 | 100 |
| RSP 4 | 234 | 215 | 320 | 525 |
| RSP 5 | 125 | 15 | 25 | 490 |

$D_{ij}$

## Distance Mask (Threshold = 500 miles)

| RSP / Auction | Auction 1 | Auction 2 | Auction 3 | Auction 4 |
|---|---|---|---|---|
| RSP 1 | 1 | 1 | 1 | 0 |
| RSP 2 | 1 | 1 | 0 | 1 |
| RSP 3 | 0 | 0 | 1 | 1 |
| RSP 4 | 1 | 1 | 1 | 0 |
| RSP 5 | 1 | 1 | 1 | 1 |

$DM_{ij}$

# FIG. 2C

## Mapping Matrix

### RSP Volume Matrix

| RSP | Volume |
|---|---|
| RSP 1 | 34 |
| RSP 2 | 27 |
| RSP 3 | 72 |
| RSP 4 | 1 |
| RSP 5 | 10 |

| RSP / Auction | Auction 1 | Auction 2 | Auction 3 | Auction 4 |
|---|---|---|---|---|
| RSP 1 | 0 | 1 | 0 | 0 |
| RSP 2 | 1 | 0 | 0 | 0 |
| RSP 3 | 0 | 0 | 0 | 1 |
| RSP 4 | 0 | 1 | 0 | 0 |
| RSP 5 | 0 | 0 | 1 | 0 |

| Total Auction Vol | 27 | 35 | 10 | 72 |
|---|---|---|---|---|
| | >= | >= | >= | >= |
| Min Capacity | 4 | 3 | 8 | 10 |

## FIG. 2D

**FIG. 3**

<u>400</u>

| Receive a distributed resource |
| --- |

402

| Determine a type for the distributed resource |
| --- |

404

| Determine a geographic location for the distributed resource |
| --- |

406

| Input the geographic location and the type into a network allocation site recommendation model to generate an output |
| --- |

408

| Determine, based on the output, a geographic reference point for a first network allocation site of a plurality of network allocation sites |
| --- |

410

| Generate a recommendation |
| --- |

412

## FIG. 4

**EUROPEAN SEARCH REPORT**

Application Number

EP 25 19 0802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASAN ZIAFAT ET AL: "A hierarchical structure for optimal resource allocation in geographically distributed clouds", FUTURE GENERATION COMPUTER SYSTEMS, vol. 90, 23 August 2018 (2018-08-23), pages 539-568, XP055688649, DOI: 10.1016/j.future.2018.08.027 * the whole document * | 1-14 | INV. G06F9/50 ADD. G06Q10/04 |

-----

**TECHNICAL FIELDS SEARCHED (IPC)**

G06F
G06Q

The present search report has been drawn up for all claims

| Place of search | Date of completion of the search | Examiner |
|---|---|---|
| The Hague | 19 November 2025 | Touloupis, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)